# FASCICULE DE BREVET EUROPEEN

(11) **EP 0 415 857 B1**
(45) Date de publication et mention de la délivrance du brevet: **28.04.1993**
(21) Numéro de dépôt: 90420381.7
(22) Date de dépôt: 21.08.1990
(51) Int. Cl.: G01M 15/00

(54) **Banc d'essai de fatigue mécanique des culasses de moteurs**
Mechanischer Ermüdungsprüfstand für Zylinderköpfe von Motoren
Mechanical fatigue testing bench for cylinder heads of engines

(30) Priorité: 29.08.1989 FR 8911521
(43) Date de publication de la demande: 06.03.1991
(73) Titulaire: MONTUPET S.A., F-92306 Levallois Perret (FR)
(72) Inventeur: Cofflard, Daniel, Hondainville, F-60250 Mouy (FR); Boucier, Maurice, F-38230 Villette d'Anthon (FR); Engler, Bernard, F-78570 Andresy (FR)
(74) Mandataire: Séraphin, Léon

(56) Documents cités:
- DE-B- 2 722 115
- US-A- 4 171 636
- US-A- 4 213 328
- US-A- 4 676 110
- PATENT ABSTRACTS OF JAPAN, vol. 7, no. 156 (P-209)(1301), 8 juillet 1983; & JP-A-5866031 (TOYO KOGYO K.K.) 20.04.1983
- PATENT ABSTRACTS OF JAPAN, vol. 9, no. 90 (P-350)(1813), 19 avril 1985; & JP-A-59217130 (DAIFUKU KIKO K.K.) 07.12.1984
- SOVIET INVENTIONS ILLUSTRATED, section electr., semaine 8933, S02, abrégé no. 240587, 27 septembre 1989, Derwent Publications Ltd., London, GB; & SU-A-14600639 (TRACTOR ENGINE RES) 23.02.1989
- PATENT ABSTRACTS OF JAPAN, vol. 8, no. 137 (P-282)(1574), 26 juin 1984; & JP-A-5937439 (NISSAN JIDOSHA K.K.) 29.02.1984

## Description

L'invention concerne un banc d'essai en fatique mécanique des culasses de moteurs à explosion, en particulier de voitures automobiles.

On connaît par le document US-A- 4 676 110 un banc d'essai de fatigue mécanique d'éprouvettes comportant une série de cylindres, munis de pistons mus par un fluide hydraulique mis sous pression par une centrale servo-hydraulique et un dispositif de contrôle et distribué aux cylindres par des passages et tuyauteries adéquates.

La course à la puissance et au rendement dans le développement des moteurs automobiles fait que les culasses sont soumises à des contraintes thermiques et mécaniques de plus en plus sévères. Ces contraintes engendrent deux types de rupture dans la culasse :
- la première d'origine thermique sous forme de fissures dans la chambre de combustion
- la deuxième d'origine mécanique sous forme de fissures dans la chambre d'eau.

Ce deuxième problème n'est actuellement résolu que par des modifications empiriques de formes de la culasse et de composition de l'alliage constituant la culasse, connus par l'expérience comme étant le plus apte à résister aux contraintes. L'efficacité des modifications de formes doit être vérifiée au banc moteur, phase lourde à mettre en oeuvre, coûteuse et exigeant des délais importants.

Le besoin d'une installation où seule la culasse est testée, d'une manière rapide et reproductible, s'est donc fait sentir.

Le banc d'essai, selon l'invention, répond à ce problème.

Le banc d'essai de résistance à la fatigue mécanique des culasses, selon l'invention, comporte un dispositif de fixation de la culasse d'essai et un dispositif générateur de pression relié à la culasse par les passages ainsi qu'un système de contrôle de la pression, et est caractérisé en ce que :
- la culasse est fixée sur une pièce de liaison intermédiaire la reliant aux dispositifs de mise en pression hydraulique des chambres de combustion et de circulation du (ou des) fluide(s) caloporteur(s).
- le dispositif générateur de pression simule aussi fidèlement que possible et de façon reproductible, le cycle de pression en fonction du temps dans les chambres de combustion;
- il est muni d'un système de circulation des fluides caloporteurs dans les chambres à eau de la culasse avec deux circuits différents, l'un à la température ambiante (F), l'autre à plus haute température (C) utilisés en alternance à l'aide d'une minuterie réglable, commandant la mise en service de l'un et l'autre des circuits, le cycle de compression dans chaque chambre de combustion étant défini par la course d'une pompe à injection alimentée par une pompe d'alimentation, par le réglage du volume de la chambre de contrôle, par le réglage de la pression maximale atteinte par la valve bistable de limitation de pression et le système de décharge du piston.

Quelques caractéristiques avantageuses du banc d'essai selon l'invention sont énumérées ci-après.

De façon plus précise, la culasse étudiée est fixée de façon classique sur une pièce de liaison parallélépipédique usinée sur une de ses faces au dessin de la culasse étudiée (entraxe des cylindres, arrivée et départ de circulations d'eau, logement des vis de fixation, etc...) et sur ses autres faces au dessin du bloc hydraulique de base et à la distribution des fluides caloporteurs. La fixation a lieu par des vis et l'étanchéité est assurée par un joint de culasse classique, comme sur un moteur classique. Il faut noter que la culasse est munie de ses soupapes, toutes en position fermée.

Le bloc hydraulique de base comporte une surface plane d'adaptation contre la pièce de liaison et un dispositif hydraulique, générateur de pression (pompe à injection).

La fixation de la pièce de liaison sur le bloc hydraulique est généralement assurée par vis et l'étanchéité obtenue par des joints toriques.
Le dispositif hydraulique comprend essentiellement :
- un réservoir d'alimentation muni d'un détecteur de niveau
- une pompe d'alimentation
- un clapet d'entrée dans la pompe d'injection
- des pompes d'injection mues chacune par une came qui impose la course du piston de la pompe,
- des valves de réglage de la pression relative maximale entre 2 et 20 MPa et du gradient de pression à la descente,
- des chambres de contrôle, à volume variable mais ajustable avant essai, pour contrôler le gradient de montée en pression entre 5 et 10 MPa/ms environ,
- un dispositif de décharge dans chaque piston d'injection pour améliorer la détente pendant la phase de pression descendante
- un fluide de compression, en général de l'huile.

Il est complété par des dispositifs secondaires tels que :
- un orifice de fuite à la partie haute de la culasse permettant la purge d'air initiale; ce circuit de purge est aménagé dans l'injecteur d'origine (diamètre calibré de 0,3 mm). Il reste constamment ouvert et il existe donc en permanence un léger débit de fuite.
- un échangeur de chaleur permettant de refroidir le fluide de compression
- un capteur de pression, permettant de contrôler la variation de pression en fonction du temps.

Les cames de commande des pompes d'injection (autant que de cylindres du moteur) sont symétriques par rapport à leur axe et décalées de 45° en vue de reproduire l'ordre d'allumage classique des cylindres (par exemple 1,3,4,2 pour un moteur à 4 cylindres).

La distribution des fluides caloporteurs comprend deux circuits constitués :
- de deux réservoirs de fluides caloporteurs, l'un à la température ambiante, l'autre muni de moyens de chauffage et de régulation de température
- des pompes de circulation
- d'un dispositif de distribution permettant de relier la pièce de liaison et la culasse à l'un ou l'autre des circuits
- des canalisations de retour au(x) réservoir(s).

Ce dispositif est complété par des clapets et crépines de pied dans les réservoirs, un échangeur de chaleur dans le réservoir "froid", des soupapes de décharge tarées à titre de sécurité.

Le dispositif de distribution est constitué par exemple de vannes à membranes, elles-mêmes commandées par des électrovannes programmables.
Le cycle, de durée ajustable sur chacun des circuits, est supérieur ou égal à 3 min (ce qui correspond sensiblement à la mise en équilibre thermique de la culasse d'essai).

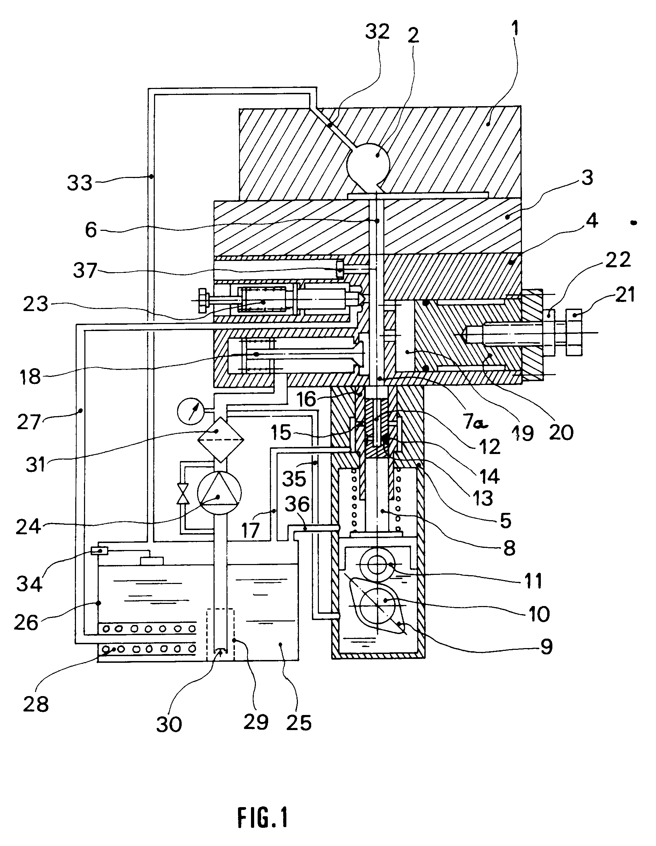

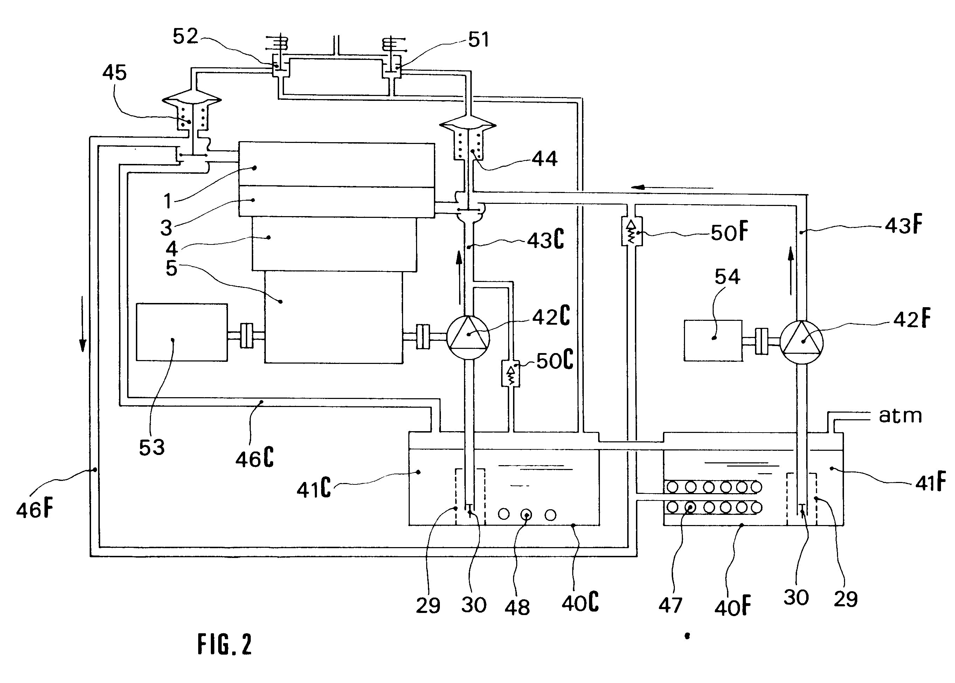

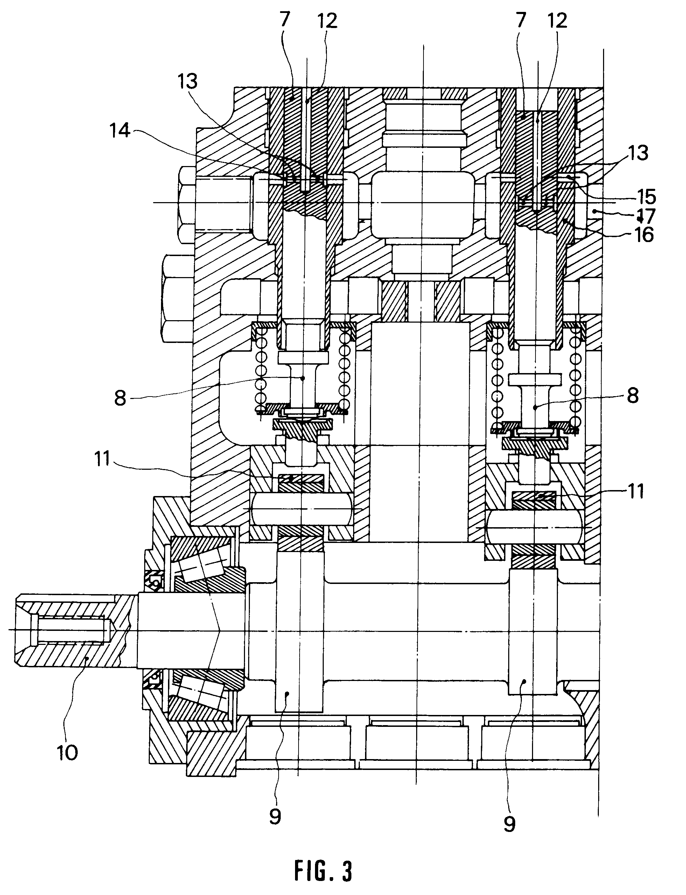

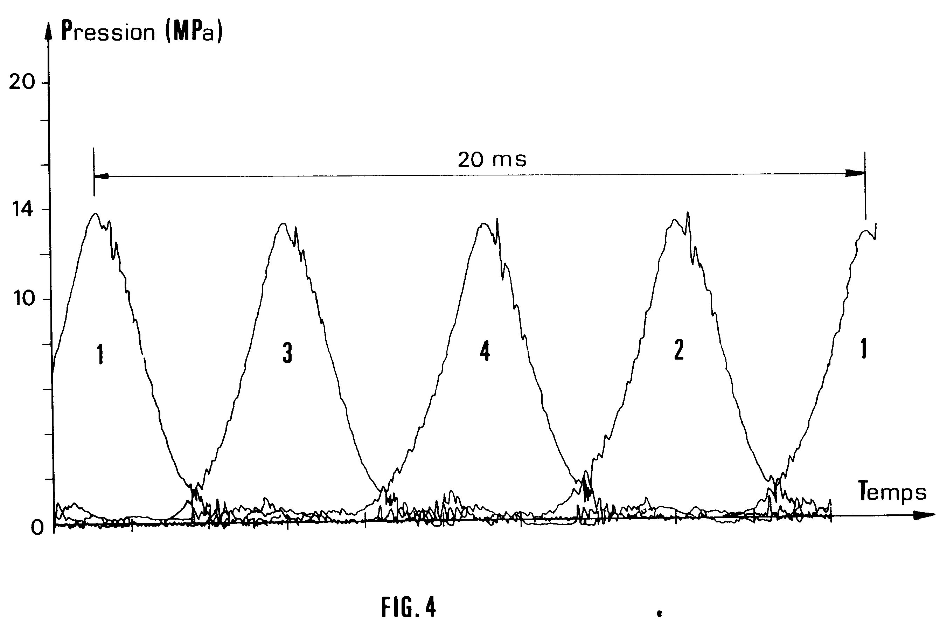

L'invention sera mieux comprise à l'aide de la description suivante illustrée par les figures 1 à 4 :
- la figure 1 représente schématiquement une vue en coupe transversale du dispositif
- la figure 2 représente schématiquement les circuits de fluides caloporteurs
- la figure 3 représente une coupe axiale de deux pompes d'injection avec piston en position haute pour l'une (à gauche) et en position basse pour l'autre (à droite).
- La figure 4 représente, à titre indicatif, l'évolution de la pression en fonction des temps dans chacune des chambres de combustion 1,2,3,4.

La culasse en essai 1, dans laquelle est schématisée une chambre de combustion 2 est fixée par sa base sur la pièce de liaison 3, l'étanchéité étant réalisée par un joint de culasse (non représenté).
La pièce de liaison 3 est percée de canaux 6 permettant la liaison avec les pompes d'injection 5, par l'intermédiaire du bloc hydraulique de base 4, également percé de canaux 7a.
Chaque pompe d'injection comporte un piston 8, commandé par l'intermédiaire d'un galet 11 par une came symétrique 9, montée sur un arbre moteur 10.
La tête du piston 7 comporte un alésage central 12, relié par quatre canaux 13 à une gorge latérale 14. Pour la position haute du piston, celle-ci est en relation avec les ouvertures 15 de la chemise 16, et le circuit de retour 17.
Le bloc hydraulique 4 comprend une valve d'arrivée 18 du fluide de compression 25, une chambre 19 de volume ajustable à l'aide d'un piston 20 de longueur adaptée, d'une vis 21 et écrou d'arrêt 22.
Il comprend également une valve de limitation de pression 23, réglable entre 2 et 20 MPa, de type bistable (sa pression de fermeture étant très inférieure à sa pression d'ouverture; ceci permet de contrôler le gradient de pression (dp/dt) descendante du cycle de compression).
En 37 est représenté schématiquement un capteur de pression.

Une pompe 24, entraînée par un moteur électrique (non représenté) introduit le fluide de compression 25 sous 0,2 MPa dans le bloc hydraulique. Celui-ci après compression à la valeur maximale désirée, retourne au réservoir 26, par la tubulure 27 après ouverture de la valve 23, et par les tubulures 27 et 17 à travers le piston 8 de la pompe d'injection 5.

Le dispositif comprend également les organes suivants :
- un échange de chaleur 28 fluide de compression/eau
- une crépine 29 et un clapet de pied 30
- un filtre 31
- un orifice de fuite 32 (en fait dans l'injecteur d'origine) relié à la tubulure de retour 33 vers le réservoir 26, permettant la purge d'air initiale
- un régulateur de niveau 34 du réservoir d'alimentation
- un circuit de graissage 35,36 dans le cas où le fluide de compression 25 est de l'huile (la came et la base du piston de la pompe d'injection fonctionnent alors en bain d'huile).

Le circuit des fluides caloporteurs comprend :
- deux réservoirs 40F et 40C de fluides caloporteurs 41F et 41C
- deux pompes de circulation 42F et 42C, entraînées par des moteurs électriques 53,54
- ces pompes sont reliées à la pièce de liaison 3 par l'intermédiaire des canalisations 43F et 43C, et d'une vanne de commande d'entrée 44 et de sortie 45 permettant la circulation de l'un ou l'autre fluide 41F ou 41C dans la culasse 1 en essai. Le fluide caloporteur revient aux réservoirs par l'une des deux canalisations 46F ou 46C.

Le réservoir 40F contenant le fluide à température ambiante est muni d'un échangeur de chaleur 47.
Le réservoir 40C contenant le fluide chaud est muni de moyens de chauffage tel que les résistances chauffantes 48 et des moyens de régulation de la température (non représentés).
Sur les circuits 43F ou 43C sont placées de soupapes de décharge tarées à titre de sécurité, 50F et 50C.
Les valves 44 et 45 sont commandées par des électrovannes 51,52, elles-mêmes commandées par une minuterie (non représentée).
Le (ou les) fluide(s) de refroidissement 41C, 41F peut être choisi à volonté par exemple huile, eau additionnés ou non de produits antigels, etc...

La fin de l'essai est détectée de la façon suivante:
- d'une part par des anomalies des cycles de pression, par exemple diminution du gradient de pression à la montée
- d'autre part, par une baisse du niveau dans le réservoir d'alimentation, une partie du fluide de compression alors passant dans les circuits de fluides caloporteurs.

Le dispositif selon l'invention permet en des temps limités (notablement inférieurs à ceux exigés pour des essais sur banc moteur):
- pour un type de culasse donné, de définir l'alliage (ou les alliages) le(s) mieux adapté(s)
- de développer de nouvelles compositions d'alliage mieux adaptées aux exigences de plus en plus sévères rencontrées dans les culasses automobiles
- de tester rapidement de nouvelles formes de culasse
- de dresser des bilans comparatifs de tenue à la fatigue mécanique.

## Revendications

1. Banc d'essai de résistance à la fatique mécanique des culasses comportant un dispositif de fixation de la culasse d'essai (1) et un dispositif générateur de pression (5) relié à la culasse (1) par les passages (6,7a) ainsi qu'un système de contrôle de la pression (19,20,21,22,32) caractérisé en ce que
- la culasse (1) est fixée sur une pièce de liaison (3) intermédiaire la reliant aux dispositifs de mise en pression hydraulique (4,6) des chambres de combustion (2) et de circulation du (ou des) fluide(s) caloporteurs (1) (41C, 41F),
- le dispositif générateur de pression (5) simule aussi fidèlement que possible et de façon reproductible, le cycle de pression en fonction du temps dans les chambres de combustion,
- il est muni d'un système de circulation des fluides caloporteurs dans les chambres à eau de la culasse (1) avec deux circuits différents, l'un à la température ambiante (F), l'autre à plus haute température (C) utilisés en alternance à l'aide d'une minuterie réglable, commandant la mise en service de l'un et l'autre des circuits, le cycle de compression dans chaque chambre de combustion étant défini par la course d'une pompe à injection (5) alimentée par une pompe d'alimentation (24), par le réglage du volume de la chambre de contrôle (19), par le réglage de la pression maximale atteinte par la valve bistable de limitation de pression (23) et le système de décharge (12,13, 14) du piston (8).

2. Banc d'essai selon la revendication 1 caractérisé en ce que le fluide du générateur de pression (25) est de l'huile.

3. Banc d'essai selon la revendication 1 caractérisé en ce que le réglage du volume de la chambre de contrôle (19) est assurée par un piston (20).

4. Banc d'essai selon l'une des revendications 1 à 3 caractérisé en ce que le gradient de pression à la montée peut varier de 5 à 10 MPa/msec.

5. Banc d'essai selon l'une des revendications 1 à 4 caractérisé en ce que la pression relative maximale est réglable entre 2 et 20 MPa.

6. Banc d'essai selon l'une des revendications 3 à 5 caractérisé en ce que la course de chaque piston (8) est imposée par une came symétrique (9).

7. Banc d'essai selon l'une des revendications 3 à 6 caractérisé en ce que le système de décharge comprend un alésage axial (12), relié à des canaux (13), communiquant avec une gorge latérale (14), disposée en face des ouvertures (15) de la chemise (16), pour la position haute du piston (8).

8. Banc d'essai selon l'une des revendications 1 à 7 caractérisé en ce que le système de circulation de fluide caloporteur comporte deux réservoirs de fluide (40C, 40F), deux pompes de circulation (42C, 42F), deux valves (44,45) et les tubulures d'arrivée et de retour (43F, 43C, 46F, 46C), l'un des circuits (F) étant a température ambiante, l'autre (C) étant à température élevée.

9. Banc selon la revendication 8 caractérisé en ce que les vannes (44,45) sont commandées par des électrovannes (51,52) elles-mêmes commandées par une minuterie réglagle.

10. Banc selon la revendication 9 caractérisé en ce que la durée du cycle imposé par la minuterie est supérieure ou égale à 3 min.

11. Banc d'essai selon l'une des revendications 1 à 10 caractérisé en ce que les fluides caloporteurs (41F, 41C) sont de l'huile ou de l'eau, additionnés ou non de produit antigel.

## Claims

1. A mechanical fatigue resistance test bench for cylinder heads and comprising a device for fixing the test cylinder head (1) and a pressure generating device (5) connected to the cylinder head (1) via the passages (6, 7a) and also a pressure control system (19, 20, 21, 22, 32), characterised in that
- the cylinder head (1) is fixed on an intermediate connecting member (3) which connects it to the means of establishing hydraulic pressure (4, 6) in the combustion chambers (2) and to means of circulating neat bearing fluid or fluids (1) (41C, 41F),
- the pressure generating device (5) simulates as faithfully as possible and in a reproducible fashion in the combustion chambers the cycle of pressure related to the time factor,
- it is provided with a system of circulating heat bearing fluids in the water chambers of the cylinder head (1) with two different circuits, one at ambient temperature (F), the other at a higher temperature (C), used alternately by means of a regulable timing device controlling operation of one or other of the circuits, the compression cycle in each combustion chamber being defined by the travel of an injection pump (5) which is supplied by a supply pump (24), by regulation of the volume of the monitoring chamber (19), by regulation of the maximum pressure attained by the bistable valve for limiting the pressure (23) and the discharge system (12, 13, 14) of the piston (8).

2. A test bench according to claim 1, characterised in that the pressure generating fluid (25) is oil.

3. A test bench according to claim 1, characterised in that regulation of the volume of the monitoring chamber (9) is carried out by a piston (20).

4. A test bench according to one of claims 1 to 3, characterised in that the rising pressure gradient may vary from 5 to 10 MPa/msec.

5. A test bench according to one of claims 1 to 4, characterised in that the maximum relative pressure can be regulated between 2 and 20 MPa.

6. A test bench according to one of claims 3 to 5, characterised in that the stroke of each piston (8) is imposed by a symmetrical cam (9).

7. A test bench according to one of claims 3 to 6, characterised in that the discharge system comprises an axial bore (12) connected to channels (13) communicating with a lateral groove (14) disposed opposite apertures (15) in the jacket (16) for the high position of the piston (8).

8. A test bench according to one of claims 1 to 7, characterised in that the system of circulating heat bearing fluid comprises two fluid reservoirs (40C, 40F), two circulating pumps (42C, 42F), two valves (44, 45) and inlet and return pipes (43F, 43C, 46F, 46C), one of the circuits (F) being at ambient temperature, the other (C) being at elevated temperature.

9. A bench according to claim 8, characterised in that the valves (44, 45) are operated by electrically operated valves (51, 52) which are themselves controlled by a regulable timing mechanism.

10. A bench according to claim 9, characterised in that the duration of the cycle imposed by the timing mechanism is greater than or equal to 3 min.

11. A test bench according to one of claims 1 to 10, characterised in that the heat bearing fluids (41F, 41C) are oil or water, to which anti-freeze product may or may not be added.

## Patentansprüche

1. Mechanischer Ermüdungsprüfstand für Zylinderköpfe mit einer Befestigungsvorrichtung des Versuchszylinderkopfes (1) und einer Druckerzeugungsvorrichtung (5), die mit dem Zylinderkopf (1) durch Kanäle (6,7a) sowie ein Drucksteuersystem (19,20,21,22,32) verbunden ist, dadurch gekennzeichnet,
- daß der Zylinderkopf (1) auf einem Zwischenverbindungsstück (3) befestigt ist, das ihn mit Hydraulikdruckvorrichtungen (4,6) der Brennkammern (2) und Kreislaufkammern des wärmeübertragenden Fluids (oder der Fluide) (1) (41C, 41F) verbindet,
- daß die Druckerzeugungsvorrichtung (5) so genau wie möglich und auf reproduzierbare Weise den Druckzyklus in Abhängigkeit der Zeit in den Brennkammern simuliert,
- daß er mit einem System des wärmeübertragenden Fluidkreislaufs in den Wasserkammern des Zylinderkopfs (1) mit unterschiedlichen Kreisläufen versehen ist, der eine bei Umgebungstemperatur (F), der andere bei einer höheren Temperatur (C), die abwechselnd mit Hilfe einer einstellbaren Uhr verwendet werden, die das Inbetriebnehmen des einen oder des anderen Kreislaufs steuert, wobei der Druckzyklus in einer jeden Brennkammer durch den Verlauf einer Einspritzpumpe (5) definiert wird, die durch eine Zuführpumpe (24) gespeist wird, durch das Einstellen des Volumens der Steuerkammer (19) durch das Einstellen des maximal erreichten Druckes durch das bistabile Druckbegrenzungsventil (23) und das Ausbringsystem (12,13,14) des Kolbens (8).

2. Prüfstand nach Anspruch 1, dadurch gekennzeichnet, daß das Druckerzeugungsfluid (25) Öl ist.

3. Prüfstand nach Anspruch 1, dadurch gekennzeichnet, daß die Volumenregelung der Steuerkammer (19) durch einen Kolben (20) sichergestellt wird.

4. Prüfstand nach einem der Ansprüche 1 bis 3, dadurch gekennzeichnet, daß der Druckgradient beim Anstieg zwischen 5 und 10 MPa/msec. sich ändern kann.

5. Prüfstand nach einem der Ansprüche 1 bis 4, dadurch gekennzeichnet, daß der maximale relative Druck zwischen 2 und 20 MPa einstellbar ist.

6. Prüfstand nach einem der Ansprüche 3 bis 5, dadurch gekennzeichnet, daß der Weg eines jeden Kolbens (8) von einem symmetrischen Nocken (9) erzwungen wird.

7. Prüfstand nach einem der Ansprüche 3 bis 6, dadurch gekennzeichnet, daß das Ausbringsystem eine axiale Öffnung (12) aufweist, die mit Kanälen (13) verbunden ist, die mit einer seitlichen Kerbe (14) in Verbindung stehen, die gegenüber den Öffnungen (15) der Schürze (16) für die obere Position des Kolbens (8) angeordnet ist.

8. Prüfstand nach einem der Ansprüche 1 bis 7, dadurch gekennzeichnet, daß das Zirkulationssystem des wärmeübertragenden Fluids zwei Fluidreservoire (40C, 40F), zwei Kreislaufpumpen (42C, 42F), zwei Ventile (44, 45) und die Zugangs- und Rückführkanäle (43F, 43C, 46F, 46C) aufweist, wobei einer der Kreise (F) Umgebungstemperatur hat und der andere (C) sich auf erhöhter Temperatur befindet.

9. Prüfstand nach Anspruch 8, dadurch gekennzeichnet, daß die Ventile (44, 45) durch Elektroventile (51, 52) gesteuert werden, die selbst durch eine einstellbare Uhr gesteuert werden.

10. Prüfstand nach Anspruch 9, dadurch gekennzeichnet, daß die Dauer eines durch die Uhr aufgebrachten Zyklus größer oder gleich 3 Minuten ist.

11. Prüfstand nach einem der Ansprüche 1 bis 10, dadurch gekennzeichnet, daß die wärmeübertragenden Fluide (41F, 41C) Öl oder Wasser sind, die mit einem Frostschutzmittel versetzt sind oder nicht.
